# EUROPÄISCHE PATENTSCHRIFT

(11) **EP 2 295 198 B1**
(45) Veröffentlichungstag und Bekanntmachung des Hinweises auf die Patenterteilung: **13.11.2013**
(21) Anmeldenummer: 09011768.0
(22) Anmeldetag: 15.09.2009
(51) Int. Cl.: B23P 19/02, F02M 61/16, B25B 27/02

(54) **Verfahren und Vorrichtung zum Fügen und/oder Bearbeiten eines Pressverbandes**
Device and method for joining and/or processing an interference fit assembly
Dispositif et procédé destinés à l'assemblage et/ou au traitement d'un joint à ajustement serré

(43) Veröffentlichungstag der Anmeldung: 16.03.2011
(73) Patentinhaber: Sonplas GmbH, 94315 Straubing (DE)
(72) Erfinder: Frankl, Herbert, 94315 Straubing (DE); Rohrmeier, Andreas, 94342 Strasskirchen (DE)
(74) Vertreter: Wunderlich, Rainer

(56) Entgegenhaltungen:
- EP-A1- 1 413 386
- DE-A1- 10 052 613
- JP-A- 2003 311 553
- JP-A- 2007 030 063

## Beschreibung

Die Erfindung betrifft ein Verfahren zum Fügen und/oder Bearbeiten eines Pressverbandes gemäß dem Oberbegriff des Anspruchs 1. Bei einem solchen Verfahren wird ein erstes Teil durch Aufbringen eines axial gerichteten Kraftverlaufs in eine Ausnehmung in einem zweiten Teil eingepresst.

Die Erfindung betrifft ferner eine Vorrichtung zum Fügen und/oder Bearbeiten eines Pressverbandes aus zumindest zwei Teilen gemäß dem Oberbegriff des Anspruchs 13. Eine solche Vorrichtung ist ausgebildet mit einer Aufnahme für zumindest eines der beiden Teile.

Einpressvorgänge sind bei der Montage von Bauteilen häufige Praxis und können in verschiedensten Verfahrensausbildungen und Vorrichtung durchgeführt werden. Von der einfachen Handpresse ohne jegliche Prozesskontrolle bis hin zur servomotorisch angetriebenen, kraft-/wegüberwachten Einpressvorrichtung gibt es ein weites Spektrum an Vorrichtungen.

Bestimmte Anforderungen verlangen, dass die Bauteile auf ein bestimmtes Sollmaß eingepresst werden. Dies ist beispielsweise bei der Hubeinstellung von Einspritzventilen der Fall. Der Sollhub eines Einspritzventils beträgt typischerweise ca. 50 µm und muss mit einer Toleranz von weniger als +/- 5 µm eingestellt werden. Eine solche Anwendung stellt besondere Ansprüche an die Einpressvorrichtung und die Verfahrensführung.

Zur Hubeinstellung von Einspritzventilen kann beispielsweise ein iterativer Einstellprozess vorgesehen werden. Hierbei wird zunächst der aktuelle Abstand des einzupressenden Bauteils zur Sollposition bestimmt. Dann wird der Einpressantrieb betätigt, wobei dem Einpressantrieb jedoch ein Verfahrweg vorgegeben wird, der definiert kleiner ist als der tatsächliche Abstand zur Sollposition. Liegt die Position nach diesem Schritt noch nicht im gewünschten Toleranzbereich, so wird der Prozess wiederholt, das heißt der Einpressantrieb wird erneut mit einer Vorgabe betätigt, die definiert kleiner ist als der tatsächliche aktuelle Abstand zur Sollposition. Dies wird gegebenenfalls so oft wiederholt, bis der gewünschte Toleranzbereich erreicht ist. Da bei dem iterativen Verfahren stets ein Verfahrweg vorgegeben wird, welcher kleiner als der tatsächliche Abstand zur Sollposition ist, soll ein "Überschießen" des gewünschten Hubes verhindert werden, denn ein solches "Überschießen" macht das einzustellende Bauteil oft unbrauchbar.

Ein iteratives Verfahren kann jedoch aufgrund der Wiederholung der einzelnen Prozessschritte vergleichsweise zeitaufwendig sein, so dass der Iterationsvorgang einen wesentlichen Kostenfaktor in der Produktion darstellen kann. Überdies hat sich gezeigt, dass die durch eine höhere Anzahl von Iterationen verursachte Stressbelastung unter Umständen negative Auswirkungen auf die Bauteilfestigkeit und die Fügequalität haben kann. Andererseits kann die Zahl der Iterationen im Hinblick auf den gewünschten Toleranzbereich nicht beliebig reduziert werden, selbst wenn dies im Hinblick auf die Prozesszeit und die Fügequalität wünschenswert wäre, und zwar insbesondere dann nicht, wenn starke Schwankungen in den Abmessungen, in der Materialzusammensetzung und/oder in der Rauhigkeit der einzelnen Teile vorliegen.

Schließlich hat sich in der Praxis gezeigt, dass auch bei einem iterativen Verfahren die Maßhaltigkeit nicht beliebig verbessert werden kann, und dass es sogar trotz einer iterativen Verfahrensführung unter Umständen zu einem "Überschießen" des gewünschten Hubes kommen kann.

EP 1 413 386 A1 beschreibt eine Einpressvorrichtung mit einer hämmernden Schlagvorrichtung. Ein einzupressendes Einsatzteil sitzt auf einer Presspinole, die zunächst mit einer Drückeinheit verfahrbar ist, bis das Einsatzteil ein Stück weit eingepresst ist. Anschließend kann die Presspinole durch einen pneumatischen Schlagantrieb hämmernd beaufschlagt werden, bis das Einsatzteil die gewünschte Endposition erreicht hat.

Eine Einpressvorrichtung mit einem piezoelektrischen Aktuator ist in der JP 2003-311553 A beschrieben.

Aus der DE 100 52 613 A1 sind eine Vorrichtung und ein Verfahren zum Einpressen eines Stiftes in eine Öffnung eines Körpers bekannt. Es sind Mittel zum Aufbringen einer Vibrationsschwingung vorgesehen, um die Losbrechkraft zu reduzieren und so die Genauigkeit beim Einpressen des Stiftes zu vergrößern.

**Aufgabe** der Erfindung ist es, ein Verfahren und eine Vorrichtung zum Fügen und/oder Bearbeiten eines Pressverbandes anzugeben, mit denen bei geringem Zeitaufwand und guter Bearbeitungsqualität eine besonders hohe Maßhaltigkeit ermöglicht wird.

Die Aufgabe wird erfindungsgemäß durch ein Verfahren mit den Merkmalen des Anspruchs 1 und eine Vorrichtung mit den Merkmalen des Anspruchs 13 gelöst. Bevorzugte Ausführungsformen sind in den abhängigen Ansprüchen angegeben.

Das erfindungsgemäße Verfahren zeichnet sich dadurch aus, dass zumindest ein Anteil des Kraftverlaufs durch eine Vielzahl von automatisch generierten und kontrollierten Stößen erzeugt wird, die auf zumindest eines der Teile wirken, und die von einem Stoßgenerator generiert werden.

Die Erfindung beruht auf der Erkenntnis, dass die Ursache für die oben genannten Einschränkungen des iterativen Verfahrens im elastischen Verhalten liegen kann, welches die zu fügenden Bauteile aufweisen.

So wurde zum einen erkannt, dass die Einpresskraft eine elastische Stauchung in Axialrichtung bewirken kann, die mit einer Ausdehnung des einzupressenden Bauteils in Querrichtung und/oder einer Erhöhung der quergerichteten Kräfte, das heißt der auf die Reibflächen wirkenden Kräfte, einhergeht. Da somit höhere Normalkräfte wirken und sich die Teile eventuell auch stärker miteinander verzahnen können, bewirkt eine solche Stauchung eine Erhöhung der Haftreibungskraft. Die Gleitreibungskraft hingegen wird von der Stauchung in der Regel weniger beeinträchtigt, vermutlich da sich die Stauchung während des Gleitens wieder zurückbilden kann. Folglich können die elastischen Effekte die Haftreibungskraft gegenüber der Gleitreibungskraft zusätzlich erhöhen. Je höher jedoch die Haftreibungskraft gegenüber der Gleitreibungskraft wird, umso schwieriger wird die Kontrolle des Einpressvorganges, und umso größer wird die Gefahr eines "Überschießens" des gewünschten Hubes.

Darüber hinaus liegt es in der Natur eines iterativen Verfahrens, dass die Verfahrwege mit zunehmender Anzahl von Iterationen immer kleiner werden. Gelangen die vorgesehenen Verfahrwege schließlich in die Größenordnung der elastischen Deformation der Bauteile, so wird die Kontrolle des Einpressvorganges weiter erschwert, da ein signifikanter Teil des vorgegebenen Weges von der elastischen Deformation aufgenommen wird. Insbesondere ist die Gefahr eines "Überschießens" hierdurch weiter vergrößert.

Nach der Erfindung ist nun vorgesehen, dass der zur Durchführung des Fügevorgangs notwendige Kraftverlauf extrem kurze, mechanische Impulse aufweist, welche durch zeitlich rasch aneinanderfolgende Stöße an das zu fügende Bauteil erzeugt werden. Die Impulsenergie kann dabei so bemessen werden, dass die Haftreibung überwunden wird und die verbleibende Energie zur Überwindung der Gleitreibung verbraucht wird, wodurch ein Vorschub erzeugt wird. Durch geeignete Bemessung der Impulsenergie kann somit ein definierter Vorschub erzeugt werden.

Die Erfindung hat erkannt, dass die durch die Stöße erzeugten mechanischen Pulse aufgrund ihrer kurzen Dauer die Bauteile nicht (quasi-)statisch deformieren, sondern dass sie sich ähnlich einer einzelnen Welle mit Schallgeschwindigkeit durch das gestoßene Bauteil bewegen. Im Gegensatz zu traditionellen, quasistatischen Einpressvorgängen werden damit nach der Erfindung keine nennenswerten elastischen Stauchungen oder Querausdehnungen hervorgerufen. Somit wirken erfindungsgemäß im Vergleich deutlich geringere Haftreibungskräfte auf das zu fügende Bauteil, was die Prozesskontrolle erheblich vereinfacht und eine deutlich gesteigerte Maßhaltigkeit ermöglicht. Überdies kann der bei quasistatischen Einpressvorgängen vorhandene Effekt vermieden werden, bei dem der Vorschub völlig oder zumindest zu einem großen Teil von der elastischen Deformation aufgenommen wird, so dass die Prozesskontrolle weiter erleichtert und die Präzision weiter erhöht wird.

Demgemäß ist es also erfindungsgemäß besonders vorteilhaft, dass die Stöße eine Pulsdauer aufweisen, welche kleiner als die Laufzeit der Stöße in zumindest einem der Teile ist. Beispielsweise kann die Pulsdauer zumindest um den Faktor 2 oder zumindest um eine Größenanordnung kleiner sein als die Laufzeit. Denn ist die Dauer der Stöße und folglich die Pulsdauer im Kraftverlauf kleiner als die Laufzeit der Stöße, so treten keine nennenswerten (quasi-)statischen Effekte mehr auf und die Impulse breiten sich in Form von Wellenpaketen im Bauteil aus. In diesem Zusammenhang kann unter der Laufzeit insbesondere die Laufzeit in Axialrichtung, also in Stoßrichtung verstanden werden, da die elastischen Effekte in Axialrichtung besonders tiefgreifende Auswirkungen auf das Einpressverhalten haben. Die Pulsdauer kann auch als Pulsbreite, Impulsdauer oder Impulsbreite bezeichnet werden.

Die Erfindung kann zum Fügen, das heißt zum Bilden eines Zusammenhalts zwischen zuvor getrennten Teilen als Pressverband dienen. Sie kann aber auch zum Bearbeiten eines Pressverbandes dienen, also auch zum Fertigeinstellen der Position von Teilen, welche bereits vorab in einen Pressverband gebracht wurden. Erfindungsgemäß werden die Stöße automatisch, das heißt insbesondere maschinell generiert, da in der Regel nur so die notwendige Präzision erhalten wird. Dabei sind kontrollierte Stöße vorgesehen, was insbesondere beinhalten kann, dass zumindest eine Kenngröße der Stöße gesteuert oder geregelt wird, und zwar insbesondere in Abhängigkeit von Parametern des Pressverbandes. Um Stoßparameter zu steuern und/oder zu regeln, ist zweckmäßigerweise eine Steuereinrichtung vorgesehen, die mit dem Stoßgenerator in Wirkverbindung steht.

Erfindungsgemäß ist vorgesehen, dass zumindest ein Anteil des Kraftverlaufs durch die Stöße erzeugt wird, das heißt der Kraftverlauf kann zusätzlich zu den von den Stößen erzeugten Stoßimpulsen auch weitere Kraftkomponenten aufweisen. Insbesondere kann sich somit der Kraftverlauf aus den Stoßimpulsen und einer quasistatischen Vorlast zusammensetzen. Grundsätzlich kann aber auch vorgesehen sein, dass sich der Kraftverlauf ausschließlich aus den Stoßimpulsen ergibt. Unter dem Kraftverlauf kann insbesondere ein zeitlicher Kraftverlauf verstanden werden.

Um einen Pressverband zu bilden, weist das erste Teil zweckmäßigerweise in dem Bereich, in welchem es in die Ausnehmung eingepresst wird, ein Übermaß im Hinblick auf die Ausnehmung auf. Besonders geeignet ist das erfindungsgemäße Verfahren zur Sollhubeinstellung eines Einspritzventils, das heißt zumindest eines der beiden Teile, insbesondere das einzupressende erste Teil, kann ein Einspritzventil sein.

Zweckmäßig ist es nach der Erfindung, dass ein Einpressfortschritt der Teile gemessen wird. Unter dem Einpressfortschritt kann insbesondere die Wegstrecke verstanden werden, welche die beiden Teile relativ zueinander beim Einpressen zurücklegen, oder die Wegdifferenz zur Sollposition. Eine solche Messung des Einpressfortschrittes ermöglicht es, gezielt auf einen Positionssollwert hinzuarbeiten. Zweckmäßigerweise ist zum Messen des Einpressfortschritts ein Wegmesser vorgesehen. Insbesondere kann dies ein berührungsloser Wegmesser, beispielsweise ein Laservibrometer, sein.

Weiter ist es vorteilhaft, dass der Kraftverlauf, insbesondere der durch die Stöße erzeugte Kraftverlauf, in Abhängigkeit des Einpressfortschritts oder/und der Einpressgeschwindigkeit eingestellt wird. Hierdurch wird ein automatisiertes Einpressen zum gewünschten Sollwert hin ermöglicht. Insbesondere kann vorgesehen sein, die Höhe der Kräfte im Kraftverlauf in Abhängigkeit vom Einpressfortschritt beziehungsweise der -geschwindigkeit einzustellen. Beispielsweise kann vorgesehen sein, dass der Stoßgenerator in Abhängigkeit des Einpressfortschritts beziehungsweise der -geschwindigkeit gesteuert oder geregelt wird.

Besonders günstig ist es, dass die Pulsenergie der Stöße in Abhängigkeit des Einpressfortschritts oder/und der Einpressgeschwindigkeit eingestellt, insbesondere gesteuert oder geregelt, wird. Unter der Pulsenergie, die auch als Impulsenergie bezeichnet werden kann, kann insbesondere der Energiegehalt des jeweiligen Stoßes verstanden werden. Dieses Ausführungsbeispiel erlaubt es, einen Regelkreis zwischen Impulsenergie und Füge- beziehungsweise Umformprozess aufzubauen. Insbesondere kann hierzu auch ein Kraftsensor vorgesehen sein, mit dem die Pulsenergie gemessen werden kann. Vorzugsweise kann vorgesehen sein, dass die Pulsdauer der einzelnen Stöße zumindest annähernd konstant ist, so dass die Pulsenergie der Stöße proportional zur der mittleren Stoßkraft und der mittleren Höhe der Impulse im Kraftverlauf ist.

Erfindungsgemäß ist vorgesehen, dass die Pulsenergie und/oder die mittlere Kraft der korrespondierenden Impulse im Kraftverlauf von geringen Werten so lange gesteigert wird, bis zwischen den Teilen ein Vorschub stattfindet. Dies kann insbesondere am Verfahrensbeginn stattfinden. Es wird also die Pulsenergie der einzelnen Stöße so lange gesteigert, bis ein Einpressen stattfindet, das heißt bis ein Einpressfortschritt messbar ist. Hierzu kann beispielsweise eine Steuerung und/oder Regelung vorgesehen sein, die bevorzugt in einer Steuereinrichtung implementiert ist.

Durch die erfindungsgemäße Ausführungsform kann einerseits ermittelt werden, welche Haftreibung überwunden werden muss, damit ein Vorschub einsetzt. Andererseits kann auch ermittelt werden, welche Gleitreibung vorhanden ist, das heißt welcher Aufwand getrieben werden muss, um einen gewünschten Einpressfortschritt zu erzeugen. Insbesondere kann somit die erfindungsgemäße Steigerung der Impulsenergie beziehungsweise der Kraft zum Zwecke der Bestimmung von Werten für die Haftreibung und/oder Gleitreibung eingesetzt werden. Erfindungsgemäß ist vorgesehen, dass zumindest einer der anfänglichen Stöße so geringe Werte hat, dass noch kein Vorschub stattfindet.

Weiter ist es bevorzugt, dass die Pulsenergie der Stöße zum Einstellen, insbesondere zum Steuern und/oder Regeln, der Einpressgeschwindigkeit variiert wird. Insbesondere kann vorgesehen sein, dass die Energie einer ganzen Stoßfolge gezielt variiert wird. Dies ermöglicht eine besonders gute Prozesskontrolle und eine Verringerung der Bearbeitungszeit. So kann beispielsweise vorgesehen sein, dass am Anfang des Füge- beziehungsweise Bearbeitungsvorganges, wenn also der Abstand zur Sollposition vergleichsweise groß ist, vergleichsweise große Impulsenergien verwendet werden, welche mit zunehmender Annäherung an die Sollposition reduziert werden. Unter der Einpressgeschwindigkeit kann die Geschwindigkeit verstanden werden, mit der die beiden Teile beim Einpressen gegeneinander bewegt werden.

Da erfindungsgemäß der Einpressvorgang durch eine Vielzahl von Stößen bewirkt wird, ist erfindungsgemäß eine individuelle Anpassung des Füge- beziehungsweise Bearbeitungsvorganges an das Toleranzspiel der aktuellen Bauteilpaarung möglich, indem die Pulsenergie bei jedem Stoß gesteuert wird, bis die Haftreibung überwunden ist und ein Vorschub erzeugt wird. Ist der erzielte Vorschub zu klein, kann die Impulsenergie weiter gesteigert werden, bis sich die gewünschte Vorschubschrittweite oder -geschwindigkeit einstellt. Ist der Vorschub zu groß, kann die Impulsenergie so reduziert werden, dass sich eine kleinere Vorschubschrittweite beziehungsweise -geschwindigkeit einstellt.

Überdies kann nach der Erfindung zum Charakterisieren der Stöße ein Kraftsensor vorgesehen sein. Dieser Kraftsensor kann insbesondere an einer Aufnahme für zumindest eines der beiden Teile, an zumindest einem der beiden Teile selbst oder am Stoßgenerator angeordnet sein. Die Kraftmessungen erlauben Rückschlüsse auf die Pulsenergien der Stöße, wobei die Kraftwerte auch unmittelbar mit den entsprechenden Energien korreliert sein können. Besonders bevorzugt ist es, dass der Stoßgenerator in Abhängigkeit von Messwerten des Kraftsensors eingestellt, insbesondere gesteuert oder geregelt wird. Dies kann beispielsweise durch eine Steuereinrichtung durchgeführt werden. Eine solche Anordnung erlaubt eine genaue Definition der Impulsenergie und somit eine besonders gute Prozesskontrolle.

Eine weitere bevorzugte Ausführungsform der Erfindung liegt darin, dass der Kraftverlauf zumindest zeitweise durch die Stöße sowie eine von einem Vorlastgenerator generierte Vorlast erzeugt wird. Demgemäß setzt sich der Kraftverlauf aus den rasch an- und absteigenden Stoßimpulsen sowie einem quasistatischen Vorlastanteil zusammen, welcher zeitlich deutlich langsamer oder überhaupt nicht variiert. Mit anderen Worten wird der Stoßgenerator durch eine Vorlast, welche auf zumindest eines der Teile, insbesondere auf das einzupressende erste Teil wirkt, unterstützt. Dies ist insbesondere dann vorteilhaft, wenn sehr hohe Einpresskräfte erforderlich sind. Durch das Anlegen einer Vorlast kann die zur Überwindung der Haftreibung vom Stoßgenerator aufzubringende Impulsenergie reduziert werden, so dass auch mit einem relativ leistungsschwachen Stoßgenerator ein Einpressvorgang mit hoher Einpresskraft durchgeführt werden kann.

Für eine besonders effektive und vielseitige Prozessführung kann vorgesehen sein, dass die Vorlast zeitlich variiert wird. Weiterhin ist es vorteilhaft, dass die Vorlast gesteuert oder geregelt wird. Hierzu kann insbesondere eine Steuereinrichtung vorgesehen sein.

Für eine besonders kompakte Anordnung ist es bevorzugt, dass die Vorlast über den Stoßgenerator in die Teile eingeleitet wird. Hierunter kann insbesondere verstanden werden, dass Stoßgenerator und Vorlastgenerator in Serie wirken, wobei der Stoßgenerator zwischen dem Vorlastgenerator und den Teilen angeordnet ist. Bei einer solchen Anordnung kann die Vorlast in besonders einfacher Weise abgeschaltet und bei Bedarf wieder zugeschaltet werden. Insbesondere ist es zweckmäßig, dass der Stoßgenerator und gegebenenfalls auch der Vorlastgenerator auf das in die Ausnehmung einzupressende erste Teil, also auf das Innenteil, einwirken.

Alternativ oder zusätzlich kann vorgesehen sein, dass die Vorlast direkt in die Teile eingeleitet wird, insbesondere in das einzupressende erste Teil. Demgemäß kann der Vorlastgenerator auch parallel zum Stoßgenerator wirken, wobei zweckmäßigerweise sowohl der Stoßgenerator als auch der Vorlastgenerator auf das einzupressende erste Teil einwirken. Generell ist bevorzugt, dass der Stoßgenerator und der Vorlastgenerator auf dasselbe Teil einwirken. Grundsätzlich können sie aber auch auf verschiedene Teile einwirken.

Eine besondere genaue Prozesskontrolle wird dadurch ermöglicht, dass die Vorlast von geringen Werten so lange gesteigert wird, bis während der Stöße ein Vorschub zwischen den Teilen stattfindet. Es kann also vorgesehen sein, dass die Vorlast bei laufendem Stoßgenerator so lange gesteigert wird, bis die Kraftimpulse des Stoßgenerators die Haftreibung überwinden und einen Vorschub erzeugen, so dass der Einpressvorgang beginnt.

Bei dem Vorlastgenerator kann es sich beispielsweise um einen pneumatischen Vorlastgenerator, einen hydraulischen Vorlastgenerator oder/und einen Vorlastgenerator mit Spindelantrieb handeln. Sofern der Vorlastgenerator pneumatisch oder hydraulisch ist, kann er zumindest einen entsprechenden Zylinder aufweisen.

Als Stoßgeneratoren kommen zweckmäßigerweise hochdynamische Aktoren zum Einsatz. Insbesondere kann vorgesehen sein, dass der Stoßgenerator einen Piezoantrieb oder/und einen servoelektrischen Linearantrieb aufweist. Mit derartigen Aktoren lässt sich sowohl eine rasche Impulsfolge von bis zu mehreren 100 Hz als auch eine präzise Vorgabe der Impulsenergie realisieren.

Eine besonders bevorzugte Ausführungsform der Erfindung liegt darin, dass der Stoßgenerator für eine zu den Teilen hin gerichtete Stoßimpulsumkehr eine Reflektormasse aufweist. Denn gemäß dem Gesetz der Impulserhaltung erzeugt ein Stoßgenerator häufig zwei gegenläufige Stoßimpulse. Damit die Energie des von den Teilen weglaufenden zweiten Stoßimpulses nicht verloren geht, kann eine schwere Reflektormasse, eine so genannte "seismische Masse" vorgesehen sein, welche den weglaufenden Impuls um 180° zu den zu fügenden Teilen hin umlenkt. Zu diesem Zweck ist die Reflektormasse geeigneterweise zumindest um den Faktor 2, vorzugsweise um eine Größenordnung schwerer als der Antrieb des Stoßgenerators.

Für einen schnellen Vorschub besonders vorteilhaft ist es, dass zumindest ein Teil der Stöße eine Pulsenergie größer 1 J aufweist. Dies kann beispielsweise mit einem Piezoantrieb realisiert werden, denn piezoelektrische Stoßgeneratoren können Impulse mit einem Energieinhalt im einstelligen Joulebereich erzeugen, womit Einpresskräfte von ca. 10.000 N erzeugt werden können. Im Hinblick auf die Einstellung eines präzisen Sollmaßes ist es vorteilhaft, dass zumindest ein Teil der Stöße einen Stoßweg kleiner 1.000 µm, insbesondere kleiner 1 µm, aufweist.

Ferner ist es vorteilhaft, wenn zumindest zeitweise eine periodische Stoßfolge vorgesehen wird. Eine Wiederholfrequenz der Stöße kann dabei beispielsweise im Bereich zwischen 10 Hz und 100 Hz liegen und insbesondere mehrere 100 Hz betragen.

Das rasche Aufeinanderfolgen der Stöße und das vergleichsweise kurze Einwirken der einzelnen Stöße auf die zu fügenden beziehungsweise zu bearbeitenden Teile und somit auch auf die zur Durchführung des Verfahrens vorgesehene Vorrichtung erlauben die Konstruktion von relativ filigranen Grundgestellen und/oder -rahmen, da keine hohen statischen Kräfte aufzunehmen sind.

Bei der erfindungsgemäßen Vorrichtung ist ein Stoßgenerator zum Beaufschlagen des anderen Teils mit automatisch generierten und kontrollierten Stößen vorgesehen.

Dabei ist es bevorzugt, dass die erfindungsgemäße Vorrichtung zum Durchführen des erfindungsgemäßen Verfahrens eingerichtet ist. Insbesondere kann die Vorrichtung zumindest eine Steuereinrichtung aufweisen, welche entsprechend konfiguriert ist. Erfindungsmerkmale, die im Zusammenhang mit dem Verfahren gekannt wurden, können somit auch bei der Vorrichtung Anwendung finden, ebenso wie umgekehrt im Zusammenhang mit der Vorrichtung genannte Merkmale beim Verfahren verwendet werden können.

Nach der Erfindung sind ein Verfahren und eine Vorrichtung zum kraftschlüssigen Verbinden von zwei Bauteilen durch geeignete Formtoleranzen mittels eines Einpressvorganges vorgesehen. Der Einpressvorgang wird durch einen Stoßgenerator angetrieben, welcher mechanische Stoßimpulse erzeugt, die in eines der beiden Bauteile eingeleitet werden. Der Energiegehalt dieser Stoßimpulse ist vorzugsweise einstellbar, insbesondere steuerbar oder regelbar. Die Einstellung des Energiegehaltes erfolgt mittels des Stoßgenerators auf Basis eines hochdynamischen Antriebs, vorzugsweise eines Piezoaktors oder eines elektromagnetischen Linearantriebs. Der Energiegehalt der Stoßimpulse wird hierbei zweckmäßigerweise so bemessen, dass ein Teil der Impulsenergie zur Überwindung der Haftreibung verwendet wird, und die restliche Energie zur Erzeugung eines Vorschubs an dem zu fügenden Bauteil verwendet wird. Durch Messung des Betrags des Vorschubes, also des Einpressfortschrittes, mittels eines Wegmessers, sowie durch Messung der Fügekraft mittels eines Kraftsensors kann die Impulsenergie der Stöße so bemessen werden, dass ein gezielter Vorschub erzeugt wird.

Die Erfindung wird nachfolgend anhand bevorzugter Ausführungsbeispiele näher erläutert, welche schematisch in den beiliegenden Figuren dargestellt sind. In den Figuren zeigen:
- Fig. 1: eine Schnittansicht einer erfindungsgemäßen Vorrichtung zur Durch- führung des erfindungsgemäßen Verfahrens;
- Fig. 2: eine perspektivische Ansicht der Vorrichtung aus Fig. 1; und
- Fig. 3: eine geschnittene Detailansicht der Vorrichtung aus Fig. 1 im Bereich des Stoßgenerators.

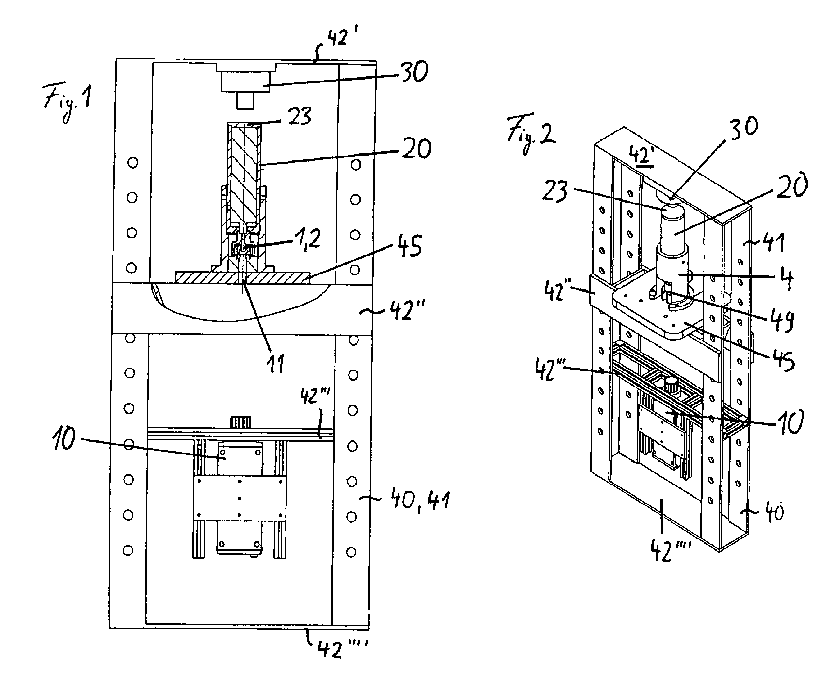

Wie insbesondere die Figuren 1 und 2 zeigen, weist die Vorrichtung ein Grundgestell 40 auf. Dieses wird durch vertikal verlaufende Seitenstreben 41 gebildet, zwischen denen auf unterschiedlicher Höhe Querstreben 42 angeordnet sind.

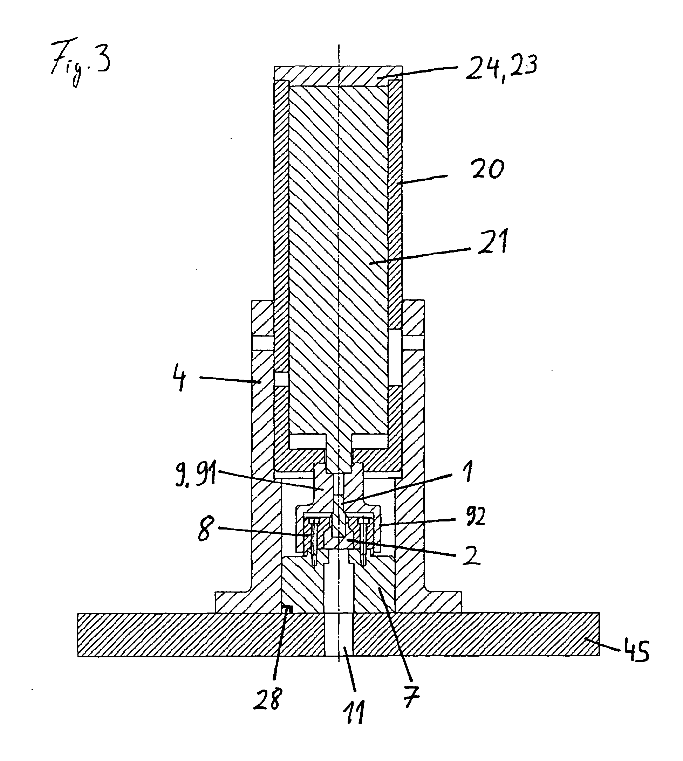

An den im mittleren Höhenbereich angeordneten Querstreben 42" ist eine horizontal verlaufende Platte 45 befestigt, an welcher die zu fügenden Bauteile 1, 2 sowie ein Stoßgenerator 20 zum Erzeugen von Stoßkräften zum Fügen der Teile 1, 2 angeordnet sind. Die Vorrichtung im Bereich der zu fügenden Teile 1, 2 und des Stoßgenerators 20 ist im Detail in Fig. 3 dargestellt.

Wie Fig. 3 zeigt, ist auf der Platte 45 eine zylindrische Aufnahme 7 angeordnet, auf welcher das das Außenteil bildende Teil 2 aufliegt. Zum Sichern des Teils 2 auf der Aufnahme 7 ist eine mit dem Teil 2 korrespondierende, ringförmige Auflage 8 vorgesehen, welche mit der Aufnahme 7 verschraubt ist, und welche das Teil 2 lateral und nach oben hin festlegt. Das andere Teil 1 bildet das Innenteil, welches beim Fügen in die Ausnehmung des Teils 2 hineingepresst wird.

Der Stoßgenerator 20 erzeugt den Einpresskraftverlauf für den Fügevorgang. Er ist piezoelektrisch ausgebildet und weist einen Piezoantrieb 21 auf. Der Stoßgenerator 20 beziehungsweise sein Piezoantrieb 21 ist mit einer Matrize 9 verbunden, welche die Stoßimpulse vom Antrieb 21 auf das Innenteil 1 überträgt. Die Matrize 9 weist dabei einen oberen, zylindrisch ausgebildeten Abschnitt 91 auf, an dem sie mit dem Stoßgenerator 20 in Kontakt steht, sowie einen unteren, topfförmigen Abschnitt 92, welcher auf das erste Teil 1 wirkt, und welcher die Auflage 8 koaxial umgibt. Die Wechselwirkung zwischen Matrize 9 und Stoßgenerator 20 erfolgt vorzugsweise durch eine Schraubverbindung. Sie kann aber auch ohne feste Verbindung, nur durch Berührung an den Übergangsflächen realisiert sein.

An seinem den zu fügenden Teilen 1, 2 abgewandten, oberen Ende weist der zylindrische Stoßgenerator 20 einen abschließenden Deckel 23 auf. Dieser Deckel 23 kann eine Reflektormasse 24 aufweisen. Eine solche Reflektormasse 24 kann Stöße, die von den Teilen 1, 2 hinweglaufen, das heißt nach oben laufende Stöße, zu den beiden Teilen 1, 2 zurückreflektieren, das heißt nach unten hin reflektieren.

Der Stoßgenerator 20 wird über eine zylindrische Halterung 4 an der Platte 45 gehalten. Die Halterung 4 umgibt dabei den Stoßgenerator 20, die Matrize 9, die Auflage 8 und die Aufnahme 7 zylindrisch. Wie Fig. 2 zeigt, ist im Mantel der Halterung 4 eine Ausnehmung 49 angeordnet, welche einen Zugang zu den beiden Teilen 1, 2 ermöglicht.

Wie die Figuren 1 und 2 zeigen, ist im oberen Teil des Grundgestells 40, an der oberen Querstrebe 42', ein Vorlastgenerator 30 angeordnet, der im dargestellten Ausführungsbeispiel als Hydraulikzylinder ausgeführt ist. Der Vorlastgenerator 30 ist koaxial zum Stoßgenerator 20 angeordnet. Der Vorlastgenerator 30 kann eine quasistatische Vorlast auf den Deckel 23 erzeugen. Im dargestellten Ausführungsbeispiel wird diese Vorlast über den Stoßgenerator 20 auf die Matrize 9 und somit weiter auf das erste Teil 1 übertragen. Insbesondere bei einer unterschiedlichen Ausführung des Deckels 23 kann aber auch vorgesehen sein, dass die Vorlast über die Halterung 4 auf die Matrize 9 übertragen wird.

Wie die Figuren 1 und 2 weiter zeigen, ist im unteren Bereich des Grundgestells 40 ein Wegmesser 10 vorgesehen, mittels dem die Position des ersten Teils 1 relativ zum zweiten Teil 2 erfasst werden kann. Alternativ könnte ein Wegmesser auch den Vorschub des Stoßgenerators 20 erfassen und dadurch den Fortschritt des Einpressvorgangs überwachen. Im dargestellten Ausführungsbeispiel ist der Wegsensor 10 als berührungsloses Laservibrometer ausgeführt. In der Platte 45 und der Aufnahme 7 sind Ausnehmungen 11 ausgebildet, die eine optische Wechselwirkung zwischen dem ersten Teil 1 und dem Wegmesser 10 ermöglichen. Der Stoßgenerator 20, der Vorlastgenerator 30 und der Wegmesser 10 sind koaxial zueinander und vorzugsweise auch koaxial zum Innenteil 1 angeordnet.

Der Wegmesser 10 ist an den Querstreben 42"' gehaltert, die unterhalb der Querstreben 42" mit dem Stoßgenerator 20 verlaufen. Auf der Unterseite ist das Grundgestell 40 mit einer Querstrebe 42"" abgeschlossen, welche das Grundgestell 40 versteift.

Wie Fig. 3 zeigt, ist unterhalb der Aufnahme 7 ein lediglich schematisch dargestellter Kraftsensor 28 zur Einpresskraftmessung angeordnet. Alternativ kann ein solcher Kraftsensor auch zwischen der Matrize 9 und dem Stoßgenerator 20 angeordnet sein.

Beim Betrieb der Vorrichtung, das heißt beim erfindungsgemäßen Verfahren, wird der Piezoantrieb 21 des Stoßgenerators 20 pulsierend betätigt. Das Innenteil 1 wird dabei über die Matrize 9 mit den resultierenden Stoßimpulsen des Stoßgenerators 20 beaufschlagt und in das zweite Teil 2 eingetrieben. Für besonders hohe Einpresskräfte kann der Vorlastgenerator 30 so betätigt werden, dass er auf den Deckel 23 des Stoßgenerators 20 eine quasistatische Vorlast ausübt. Diese Vorlast wird über den Stoßgenerator 20 und die Matrize 9 auf das erste Teil 1 übertragen, so dass sich im ersten Teil 1 die durch die Stöße des Stoßgenerators 20 erzeugten Kräfte und die durch den Vorlastgenerator 30 erzeugten Vorlastkräfte summieren.

Dabei wird vom Wegmesser 10 ein Wegsignal erzeugt, welches zur Steuerung des Einpressvorganges verwendet werden kann. Insbesondere können Einpressgeschwindigkeit und Bauteilposition durch eine Messdatenerfassung ständig ermittelt und zur Berechung und Regelung der Impulsenergie des Stoßgenerators 20 verwendet werden.

Mittels des Kraftsensors 28 kann die auf das Bauteil 1 und/oder 2 wirkende Kraft erfasst werden. Dabei kann der im Einpressvorgang auftretende Kraft/Zeit- oder Kraft/Weg-Verlauf mittels einer geeigneten Messdatenerfassung und Computerauswertung aufgezeichnet und ausgewertet werden.

## Patentansprüche

1. Verfahren zum Fügen und/oder Bearbeiten eines Pressverbandes, bei dem
- ein erstes Teil (1) durch Aufbringen eines axial gerichteten Kraftverlaufs in eine Ausnehmung in einem zweiten Teil (2) eingepresst wird,
- wobei zumindest ein Anteil des Kraftverlaufs durch eine Vielzahl von automatisch generierten und kontrollierten Stößen erzeugt wird, die auf zumindest eines der Teile (1, 2) wirken, und die von einem Stoßgenerator (20) generiert werden,
**dadurch gekennzeichnet,**
**dass** die Pulsenergie der Stöße von geringen Werten so lange gesteigert wird, bis zwischen den Teilen (1, 2) ein Vorschub stattfindet.

2. Verfahren nach Anspruch 1,
**dadurch gekennzeichnet,**
**dass** die Stöße eine Pulsdauer aufweisen, welche kleiner als die Laufzeit der Stöße in zumindest einem der Teile (1, 2) ist.

3. Verfahren nach einem der vorstehenden Ansprüche,
**dadurch gekennzeichnet,**
**dass** ein Einpressfortschritt der Teile (1, 2) gemessen wird, und
**dass** die Pulsenergie der Stöße in Abhängigkeit des Einpressfortschritts eingestellt wird.

4. Verfahren nach einem der vorstehenden Ansprüche,
**dadurch gekennzeichnet,**
**dass** die Pulsenergie der Stöße zum Einstellen der Einpressgeschwindigkeit variiert wird.

5. Verfahren nach einem der vorstehenden Ansprüche,
**dadurch gekennzeichnet,**
**dass** zum Charakterisieren der Stöße ein Kraftsensor (28) vorgesehen wird, und dass der Stoßgenerator (20) in Abhängigkeit von Messwerten des Kraftsensors (28) eingestellt wird.

6. Verfahren nach einem der vorstehenden Ansprüche,
**dadurch gekennzeichnet,**
**dass** der Kraftverlauf zumindest zeitweise durch die Stöße sowie eine von einem Vorlastgenerator (30) generierte Vorlast erzeugt wird.

7. Verfahren nach Anspruch 6,
**dadurch gekennzeichnet,**
**dass** die Vorlast über den Stoßgenerator (20) in die Teile (1, 2) eingeleitet wird oder
**dass** die Vorlast direkt in die Teile (1, 2) eingeleitet wird.

8. Verfahren nach einem der Ansprüche 6 oder 7,
**dadurch gekennzeichnet,**
**dass** die Vorlast von geringen Werten so lange gesteigert wird, bis während der Stöße ein Vorschub zwischen den Teilen (1, 2) stattfindet.

9. Verfahren nach einem der Ansprüche 6 bis 8,
**dadurch gekennzeichnet,**
**dass** der Vorlastgenerator (30) ein pneumatischer Vorlastgenerator, ein hydraulischer Vorlastgenerator oder ein Vorlastgenerator mit Spindelantrieb ist.

10. Verfahren nach einem der vorstehenden Ansprüche,
**dadurch gekennzeichnet,**
**dass** der Stoßgenerator (20) einen Piezoantrieb (21) oder/und einen servoelektrischen Linearantrieb aufweist.

11. Verfahren nach einem der vorstehenden Ansprüche,
**dadurch gekennzeichnet,**
**dass** der Stoßgenerator (20) für eine zu den Teilen (1, 2) hin gerichtete Stoßimpulsumkehr eine Reflektormasse (24) aufweist.

12. Verfahren nach einem der vorstehenden Ansprüche,
**dadurch gekennzeichnet,**
**dass** zumindest ein Teil der Stöße eine Pulsenergie größer 1 J aufweist,
**dass** zumindest ein Teil der Stöße einen Stoßweg kleiner 100 µm, insbesondere kleiner 1 µm aufweist, und
**dass** zumindest zweitweise eine periodische Stoßfolge vorgesehen wird, wobei eine Wiederholfrequenz der Stöße im Bereich zwischen 10 Hz und 1000 Hz liegt.

13. Vorrichtung zum Fügen und/oder Bearbeiten eines Pressverbandes aus zumindest zwei Teilen (1, 2), mit
- einer Aufnahme (7) für zumindest eines der beiden Teile (1 oder 2) und
- einem Stoßgenerator (20) zum Beaufschlagen des anderen Teils (2 bzw. 1) mit automatisch generierten und kontrollierten Stößen,
**dadurch gekennzeichnet,**
- **dass** der Stoßgenerator (20) eingerichtet ist, die Pulsenergie der Stöße von geringen Werten so lange zu steigern, bis zwischen den Teilen (1, 2) ein Vorschub stattfindet.

14. Vorrichtung nach Anspruch 13,
**dadurch gekennzeichnet,**
**dass** sie zum Durchführen des Verfahrens nach einem der Ansprüche 1 bis 13 eingerichtet ist.

## Claims

1. Method for joining and/or processing an interference fit assembly, in which
- a first part (1) is pressed into a recess in a second part (2) by applying an axially directed force path,
- wherein at least a portion of the force path is produced by a plurality of automatically generated and controlled impacts which act on at least one of the parts (1, 2) and which are generated by an impact generator (20),
**characterized in that**
the pulse energy of the impacts of low values is increased until a feed motion takes place between the parts (1, 2).

2. Method according to claim 1,
**characterized in that**
the impacts have a pulse duration which is smaller than the running time of the impacts in at least one of the parts (1, 2).

3. Method according to any one of the preceding claims,
**characterized in that**
a pressing-in progress of the parts (1, 2) is measured and
**in that** the pulse energy of the impacts is set as a function of the pressing-in progress.

4. Method according to any one of the preceding claims,
**characterized in that**
the pulse energy of the impacts is varied in order to set the pressing-in speed.

5. Method according to any one of the preceding claims,
**characterized in that**
for characterization of the impacts a force sensor (28) is provided and **in that** the impact generator (20) is set as a function of measured values of the force sensor (28).

6. Method according to any one of the preceding claims,
**characterized in that**
the force path is produced at least temporarily by the impacts and by a preload generated by a preload generator (30).

7. Method according to claim 6,
**characterized in that**
the preload is introduced via the impact generator (20) into the parts (1, 2) or the preload is introduced directly into the parts (1, 2).

8. Method according to any one of claims 6 or 7,
**characterized in that**
the preload of low values is increased until a feed motion takes place between the parts (1, 2) during the impacts.

9. Method according to any one of claims 6 to 8,
**characterized in that**
the preload generator (30) is a pneumatic preload generator, a hydraulic preload generator or a preload generator with spindle drive.

10. Method according to any one of the preceding claims,
**characterized in that**
the impact generator (20) has a piezo drive (21) and/or a servo-electric linear drive.

11. Method according to any one of the preceding claims,
**characterized i**n that
the impact generator (20) has a reflector mass (24) for an impact impulse inversion directed towards the parts (1, 2).

12. Method according to any one of the preceding claims,
**characterized in that**
at least a part of the impacts has a pulse energy greater than 1 J,
at least a part of the impacts has an impact path smaller than 100 µm, in particular smaller than 1 µm, and
**in that** a periodical impact sequence is provided at least temporarily, wherein a repetition rate of the impacts lies in a range between 10 Hz and 1000 Hz.

13. Device for joining and/or processing an interference fit assembly of at least two parts (1, 2), with
- a receiving element (7) for at least one of the two parts (1 or 2) and
- an impact generator (20) for applying automatically generated and controlled impacts to the other part (2 or 1),
**characterized in that**
- the impact generator (20) is adapted to increase the pulse energy of the impacts of low values until a feed motion takes place between the parts (1, 2).

14. Device according to claim 13,
**characterized in that**
it is adapted to carry out the method according to any one of claims 1 to 13.

## Revendications

1. Procédé destiné à l'assemblage et/ou au traitement d'un montage à ajustement serré, dans lequel :
- une première pièce (1) est enfoncée dans un évidement à l'intérieur d'une deuxième pièce (2) par l'intermédiaire de l'application d'un profil d'évolution de force dirigé de manière axiale,
- au moins une partie du profil d'évolution de force est obtenue au moyen d'un grand nombre d'impacts générés et commandés de manière automatique, qui agissent sur au moins l'une des pièces (1, 2) et qui sont produits par un générateur d'impacts (20),
**caractérisé :**
**en ce que** l'énergie d'impulsion des impacts est augmentée par valeurs faibles suffisamment longtemps jusqu'à ce qu'un enfoncement se produise entre les pièces (1, 2).

2. Procédé selon la revendication 1,
**caractérisé :**
**en ce que** les impacts présentent une durée d'impulsion qui est plus faible que la durée des impacts dans au moins l'une des pièces (1, 2).

3. Procédé selon une des revendications précédentes,
**caractérisé :**
**en ce que** la progression de l'enfoncement des pièces (1, 2) est mesurée, et
**en ce que** l'énergie d'impulsion des impacts est réglée en fonction de la progression de l'enfoncement.

4. Procédé selon une des revendications précédentes,
**caractérisé :**
**en ce que** l'énergie d'impulsion des impacts est modifiée en vue du réglage de la vitesse de l'enfoncement.

5. Procédé selon une des revendications précédentes,
**caractérisé :**
**en ce que**, pour la caractérisation des impacts, un capteur de force (28) est prévu, et
**en ce que** le générateur d'impacts (20) est réglé en fonction des valeurs de mesure du capteur de force (28).

6. Procédé selon une des revendications précédentes,
**caractérisé :**
**en ce que** le profil d'évolution de force est produit au moins par intermittence au moyen des impacts ainsi qu'au moyen d'une précharge générée par un générateur de précontrainte (30).

7. Procédé selon la revendication 6,
**caractérisé :**
**en ce que** la précharge est introduite au niveau des pièces (1, 2) par l'intermédiaire du générateur d'impacts (20) ou
**en ce que** la précharge est introduite directement au niveau des pièces (1, 2).

8. Procédé selon une des revendications 6 ou 7,
**caractérisé :**
**en ce que** la précharge est augmentée par valeurs faibles suffisamment longtemps jusqu'à ce que, pendant les impacts, un enfoncement se produise entre les pièces (1, 2).

9. Procédé selon une des revendications 6 à 8,
**caractérisé :**
**en ce que** le générateur de précontrainte (30) est un générateur de précontrainte pneumatique, un générateur de précontrainte hydraulique ou un générateur de précontrainte avec entraînement à broche.

10. Procédé selon une des revendications précédentes,
**caractérisé :**
**en ce que** le générateur d'impacts (20) comporte un entraînement piézoélectrique (21) ou/et un servo-entraînement électrique linéaire.

11. Procédé selon une des revendications précédentes,
**caractérisé :**
**en ce que** le générateur d'impacts (20) comporte un corps réflecteur (24) pour un retour des impulsions d'impact dirigé vers les pièces (1, 2).

12. Procédé selon une des revendications précédentes,
**caractérisé :**
**en ce que** une partie au moins des impacts présente une énergie d'impulsion supérieure à 1 J,
**en ce que** une partie au moins des impacts présente un parcours d'impact inférieur à 100 µm, et plus particulièrement inférieur à 1 µm, et
**en ce que**, au moins par intermittence, une suite d'impacts périodique est prévue, avec une fréquence de répétition des impacts qui est située dans la plage comprise entre 10 Hz et 1000 Hz.

13. Dispositif destiné à l'assemblage et/ou au traitement d'un montage à ajustement serré composé de deux pièces (1, 2) au moins, avec :
- un réceptacle (7) pour au moins l'une des deux pièces (1, ou 2) et
- un générateur d'impacts (20) prévu pour l'application à l'autre pièce (2, ou 1) d'impacts générés et commandés de manière automatique,
**caractérisé :**
- **en ce que** le générateur d'impacts (20) est organisé de manière que l'énergie d'impulsion des impacts soit augmentée par valeurs faibles suffisamment longtemps jusqu'à ce que, pendant les impacts, un enfoncement se produise entre les pièces (1, 2).

14. Dispositif selon la revendication 13,
**caractérisé en ce que** :
celui-ci est organisé pour la mise en oeuvre du procédé selon une des revendications 1 à 13.
